# EUROPEAN PATENT SPECIFICATION

(11) **EP 4 508 507 B1**
(45) Date of publication and mention of the grant of the patent: **02.09.2026**
(21) Application number: 23716612.9
(22) Date of filing: 06.04.2023
(51) Int. Cl.: G06F 3/01, G06F 17/00, G06F 16/245, G06T 15/04, G06V 20/20, G06V 40/20

(54) **HYBRID HAPTIC TEXTURES**
HYBRIDE HAPTISCHE TEXTUREN
TEXTURES HAPTIQUES HYBRIDES

(30) Priority: 11.04.2022 EP 22305518
(43) Date of publication of application: 19.02.2025
(73) Proprietor: InterDigital CE Patent Holdings, SAS, 75017 Paris (FR)
(72) Inventor: GALVANE, Quentin, 35576 Cesson-Sevigne (FR); GUILLOTEL, Philippe, 35576 Cesson-Sevigne (FR); GALPIN, Franck, 35576 Cesson-Sevigne (FR)
(74) Representative: Interdigital
(86) International application number: PCT/EP2023/059235
(87) International publication number: WO 2023/198622

(56) References cited:
- VEZZOLI ERIC ET AL: "Texture Rendering Strategies with a High Fidelity - Capacitive Visual-Haptic Friction Control Device", 3 July 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 251 - 260, ISBN: 978-3-540-74549-5, XP047354338
- REKIK YOSRA YOSRA REKIK@INRIA FR ET AL: "Localized Haptic Texture A Rendering Technique based on Taxels for High Density Tactile Feedback", INTERACTION DESIGN AND CHILDREN, ACM, 2 PENN PLAZA, SUITE 701NEW YORKNY10121-0701USA, 2 May 2017 (2017-05-02), pages 5006 - 5015, XP058539835, ISBN: 978-1-4503-4921-5, DOI: 10.1145/3025453.3026010

## Description

### TECHNICAL FIELD

At least one of the present embodiments generally relates to immersive scene description and more particularly to haptic effects based on haptic textures.

### BACKGROUND

Fully immersive user experiences are proposed to users through immersive systems based on feedback and interactions. The interaction may use conventional ways of control that fulfill the need of the users. Current visual and auditory feedback provide satisfying levels of realistic immersion. Additional feedback can be provided by haptic effects that allow a human user to perceive a virtual environment through his other senses and thus get a better experience of the full immersion with improved realism. However, haptics is still one area of potential progress to improve the overall user experience in an immersive system.

Conventionally, an immersive system may comprise a 3D scene representing a virtual environment with virtual objects localized within the 3D scene. To improve user interaction with the elements of the virtual environment, haptic feedback may be used through stimulation of haptic actuators. Such interaction is based on the notion of "haptic objects" that correspond to physical phenomena to be transmitted to the user. In the context of an immersive scene, a haptic object allows to provide a haptic effect by defining the stimulation of appropriate haptic actuators to mimic the physical phenomenon on the haptic rendering device. Different types of haptic actuators allow to restitute different types of haptic feedbacks.

An example of a haptic object is an explosion. An explosion can be rendered though vibrations and heat, thus combining different haptic effects on the user to improve the realism. An immersive scene typically comprises multiple haptic objects, for example using a first haptic object related to a global effect and a second haptic object related to a local effect.

The principles described herein apply to any immersive environment using haptics such as augmented reality, virtual reality, mixed reality, or haptics-enhanced video (or omnidirectional/360° video) rendering, for example, and more generally apply to any haptics-based user experience. A scene for such examples of immersive environments is thus considered an immersive scene.

Haptics refers to sense of touch and includes two dimensions, tactile and kinesthetic. The first one relates to tactile sensations such as friction, roughness, hardness, temperature and is felt through the mechanoreceptors of the skin (Merkel cell, Ruffini ending, Meissner corpuscle, Pacinian corpuscle) and thermoreceptors. The second one is linked to the sensation of force/torque, position, motion/velocity provided by the muscles, tendons, and the mechanoreceptors in the joints. Haptics is also involved in the perception of self-motion since it contributes to the proprioceptive system (i.e., perception of one's own body). Thus, the perception of acceleration, speed or any body model could be assimilated as a haptic effect. The frequency range is about 0-1KHz depending on the type of modality. Most existing devices able to render haptic signals generate vibrations. Examples of such haptic actuators are linear resonant actuator (LRA), eccentric rotating mass (ERM), and voice-coil linear motor. These actuators may be integrated into haptic rendering devices such as haptic suits but also smartphones or game controllers.

To encode haptic signals, several formats have been defined related to either a high-level description using XML-like formats (for example MPEG-V), parametric representation using json-like formats such as Apple Haptic Audio Pattern (AHAP) or Immersion Corporation's HAPT format, or waveform encoding (IEEE 1918.1.1 ongoing standardization for tactile and kinesthetic signals). The HAPT format has been recently included into the MPEG ISOBMFF file format specification (ISO/IEC 14496 part 12). Moreover, GL Transmission Format (glTF^{™}) is a royalty-free specification for the efficient transmission and loading of 3D scenes and models by applications. This format defines an extensible, common publishing format for 3D content tools and services that streamlines authoring workflows and enables interoperable use of content across the industry.

Moreover, a new haptic file format is being defined within the MPEG standardization group and relates to a coded representation for haptics. The Reference Model of this format is not yet released but is referenced herein as RM0. With this reference model, the encoded haptic description file can be exported either as a JSON interchange format (for example a .gmpg file) that is human readable or as a compressed binary distribution format (for example a .mpg) that is particularly adapted for transmission towards haptic rendering devices. The proposed format adds haptic capabilities to the glTF^{™} format.

Vezzoli Eric et al.: "Texture Rendering Strategies with a High Fidelity - Capacitive Visual-Haptic Friction Control Device", 3 July 2016 (2016-07-03), XP047354338, ISBN: 978-3-540-74549-5 and
Rekik Yosra et al.: "Localized Haptic Texture A Rendering Technique based on Taxels for High Density Tactile Feedback", XP058539835, DOI: 10.1145/3025453.3026010 ISBN: 978-1-4503-4921-5
disclose prior art relating to texture rendering techniques for haptic devices.

### SUMMARY

Embodiments relate to a data structure for an immersive scene description comprising information representative of a haptic effect based on haptic texture and comprising an additional information field determining how to interpret haptic textures. This allows to differentiate between the cases where a pixel directly represents the value of the haptic effect or where a pixel references a haptic signal representing the haptic effect. The additional information may also carry information to select a bit depth and a range for a haptic property amongst a set of different settings.

A first aspect of at least one embodiment is directed to a method for decoding a haptic effect comprising, obtaining information representative of the haptic effect comprising a haptic texture and additional information, when the additional information corresponds to a first value, providing data of the haptic texture to haptic actuators and when the additional information corresponds to a second value, selecting a haptic signal from a set of haptic signals based on a value of a pixel of the texture and providing data of the selected haptic signal to the haptic actuators.

A second aspect of at least one embodiment is directed to a device comprising a processor configured to obtain information representative of the haptic effect comprising a haptic texture and additional information, when the additional information corresponds to a first value, provide data of the haptic texture to haptic actuators and when the additional information corresponds to a second value, select a haptic signal from a set of haptic signals based on a value of a pixel of the texture and provide data of the selected haptic signal to the haptic actuators.

A third aspect of at least one embodiment is directed to a non-transitory computer readable medium comprising haptic data generated according to the first or second aspects.

A fourth aspect of at least one embodiment is directed to a computer program comprising program code instructions executable by a processor, the computer program implementing at least the steps of a method according to the first aspect.

A fifth aspect of at least one embodiment is directed to a computer program product stored on a non-transitory computer readable medium and comprising program code instructions executable by a processor, the computer program product implementing at least the steps of a method according to the first aspect.

In a variant of first and second methods, the first value of the additional information indicates that the texture is to be interpreted as a direct texture rendering and wherein data of the haptic texture is provided based on a position of an element representing the user with regards to the texture.

In a variant of first and second methods, the second value of the additional information indicates that texture is to be interpreted as comprising references to haptic signals and wherein selecting a haptic signal is performed based on a position of an element representing the user with regards to the texture.

In a variant of first and second methods, the additional information further indicates a bit depth of the texture, a range of the haptic effect, or a bit depth of the texture and a range of the haptic effect.

### BRIEF DESCRIPTION OF THE DRAWINGS

Figure 1 illustrates a block diagram of an example of immersive system in which various aspects and embodiments are implemented.
Figure 2A illustrates an example of haptic texture bumpmap according to the prior art.
Figure 2B represent the 1D signal that could be used to represent the haptic texture presented in figure 2A.
Figure 2C illustrates an example of uncanny rendering scenario in the context of figure 2A.
Figure 2D illustrates the rendering of a haptic texture with the SHO and SHT methods.
Figure 2E illustrates the principle of a set of taxels providing a spatial approach to the SHT method.
Figure 3 illustrates an example of data structure of an immersive scene description according to at least one embodiment.
Figure 4 illustrates an example of 3D object according to at least one embodiment.
Figure 5 illustrates a haptic texture used as friction map for the bottle.
Figure 6 illustrates an example flowchart of process for rendering a haptic feedback description file according to at least one embodiment.

### DETAILED DESCRIPTION

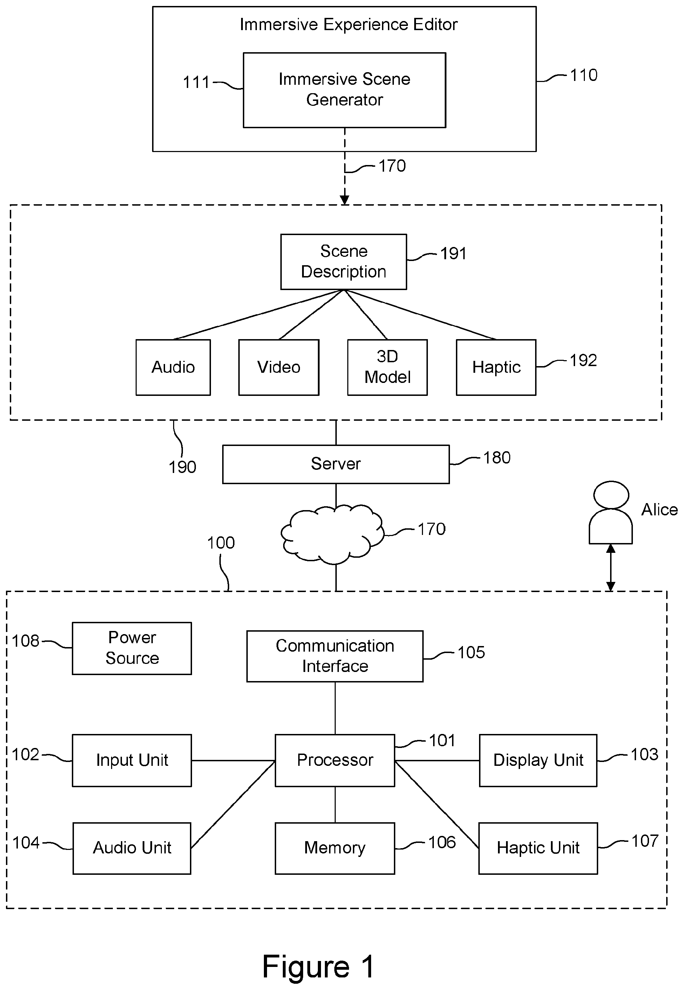

**Figure 1** illustrates a block diagram of an example of immersive system in which various aspects and embodiments are implemented. In the depicted immersive system, the user Alice uses the haptic rendering device 100 to interact with a server 180 hosting an immersive scene 190 through a communication network 170. This immersive scene 190 may comprise various data and/or files representing different elements (scene description 191, audio data, video data, 3D models, and haptic description file 192) required for its rendering. The immersive scene 190 may be generated under control of an immersive experience editor 110 that allows to arrange the different elements together and design an immersive experience. Appropriate description files and various data files representing the immersive experience are generated by an immersive scene generator 111 (a.k.a encoder) and encoded in a format adapted for transmission to haptic rendering devices. The immersive experience editor 110 is typically performed on a computer that will generate immersive scene to be hosted on the server. For the sake of simplicity, the immersive experience editor 110 is illustrated as being directly connected through the dotted line 171 to the immersive scene 190. In practice, the immersive scene 190 is hosted on the server 180 and the computer running the immersive experience editor 110 is connected to the server 180 through the communication network 170.

The haptic rendering device 100 comprises a processor 101. The processor 101 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor may perform data processing such as haptic signal decoding, input/ output processing, and/or any other functionality that enables the device to operate in an immersive system.

The processor 101 may be coupled to an input unit 102 configured to convey user interactions. Multiple types of inputs and modalities can be used for that purpose. Physical keypad or a touch sensitive surface are typical examples of input adapted to this usage although voice control could also be used. In addition, the input unit may also comprise a digital camera able to capture still pictures or video in two dimensions or a more complex sensor able to determine the depth information in addition to the picture or video and thus able to capture a complete 3D representation. The processor 101 may be coupled to a display unit 103 configured to output visual data to be displayed on a screen. Multiple types of displays can be used for that purpose such as a liquid crystal display (LCD) or organic light-emitting diode (OLED) display unit. The processor 101 may also be coupled to an audio unit 104 configured to render sound data to be converted into audio waves through an adapted transducer such as a loudspeaker for example. The processor 101 may be coupled to a communication interface 105 configured to exchange data with external devices. The communication preferably uses a wireless communication standard to provide mobility of the haptic rendering device, such as cellular (e.g., LTE) communications, Wi-Fi communications, and the like. The processor 101 may access information from, and store data in, the memory 106, that may comprise multiple types of memory including random access memory (RAM), read-only memory (ROM), a hard disk, a subscriber identity module (SIM) card, a memory stick, a secure digital (SD) memory card, any other type of memory storage device. In embodiments, the processor 101 may access information from, and store data in, memory that is not physically located on the device, such as on a server, a home computer, or another device.

The processor 101 is coupled to a haptic unit 107 configured to provide haptic feedback to the user, the haptic feedback being described in the haptic description file 192 that is related to the scene description 191 of an immersive scene 190. The haptic description file 192 describes the kind of feedback to be provided according to the syntax described further hereinafter. Such description file is typically conveyed from the server 180 to the haptic rendering device 100. The haptic unit 107 may comprise a single haptic actuator or a plurality of haptic actuators located at a plurality of positions on the haptic rendering device. Different haptic units may have a different number of actuators and/or the actuators may be positioned differently on the haptic rendering device.

In at least one embodiment, the processor 101 is configured to render a haptic signal according to embodiments described further below, in other words to apply a low-level signal to a haptic actuator to render the haptic effect. Such low-level signal may be represented using different forms, for example by metadata or parameters in the description file or by using a digital encoding of a sampled analog signal (e.g., PCM or LPCM).

The processor 101 may receive power from the power source 108 and may be configured to distribute and/or control the power to the other components in the device 100. The power source may be any suitable device for powering the device. As examples, the power source may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

While the figure depicts the processor 101 and the other elements 102 to 108 as separate components, it will be appreciated that these elements may be integrated together in an electronic package or chip. It will be appreciated that the haptic rendering device 100 may include any sub-combination of the elements described herein while remaining consistent with an embodiment. The processor 101 may further be coupled to other peripherals or units not depicted in figure 1 which may include one or more software and/or hardware modules that provide additional features, functionality and/or wired or wireless connectivity. For example, the peripherals may include sensors such as a universal serial bus (USB) port, a vibration device, a television transceiver, a hands-free headset, a Bluetooth^{®} module, a frequency modulated (FM) radio unit, a digital music player, a media player, a video game player module, an Internet browser, and the like. For example, the processor 101 may be coupled to a localization unit configured to localize the haptic rendering device within its environment. The localization unit may integrate a GPS chipset providing longitude and latitude position regarding the current location of the haptic rendering device but also other motion sensors such as an accelerometer and/or an e-compass that provide localization services.

Typical examples of haptic rendering device 100 are haptic suits, smartphones, game controllers, haptic gloves, haptic chairs, haptic props, motion platforms, etc. However, any device or composition of devices that provides similar functionalities can be used as haptic rendering device 100 while still conforming with the principles of the disclosure.

In at least one embodiment, the device does not include a display unit but includes a haptic unit. In such embodiment, the device does not render the scene visually but only renders haptic effects. However, the device may prepare data for display so that another device, such as a screen, can perform the display. Example of such devices are haptic suits or motion platforms.

In at least one embodiment, the device does not include a haptic unit but includes a display unit. In such embodiment, the device does not render the haptic effect but only renders the scene visually. However, the device may prepare data for rendering the haptic effect so that another device, such as a haptic prop, can perform the haptic rendering. Examples of such devices are smartphones, head-mounted displays, or laptops.

In at least one embodiment, the device does not include a display unit nor does it include a haptic unit. In such embodiment, the device does not visually render the scene and does not render the haptic effects. However, the device may prepare data for display so that another device, such as a screen, can perform the display and may prepare data for rendering the haptic effect so that another device, such as a haptic prop, can perform the haptic rendering. Examples of such devices are computers, game consoles, optical media players, or set-top boxes.

In at least one embodiment, the immersive scene 190 and associated elements are directly hosted in memory 106 of the haptic rendering device 100 allowing local rendering and interactions. In a variant of this embodiment, the device 100 also comprises the immersive experience editor 110 allowing a fully standalone operation, for example without needing any communication network 170 and server 180.

Although the different elements of the immersive scene 190 are depicted in figure 1 as separate elements, the principles described herein apply also in the case where these elements are directly integrated in the scene description and not separate elements. Any mix between two alternatives is also possible, with some of the elements integrated in the scene description and other elements being separate files.

For the sake of simplicity of the description, interactions and haptic effects are described herein using a finger touching a tactile surface as interaction medium. However, any other element representing the position of the user in the immersive environment (such as a body part of the user, the position provided by a force-feedback device, the localization of a head-mounted display in a virtual reality environment) may be used, still relying on the same principles.

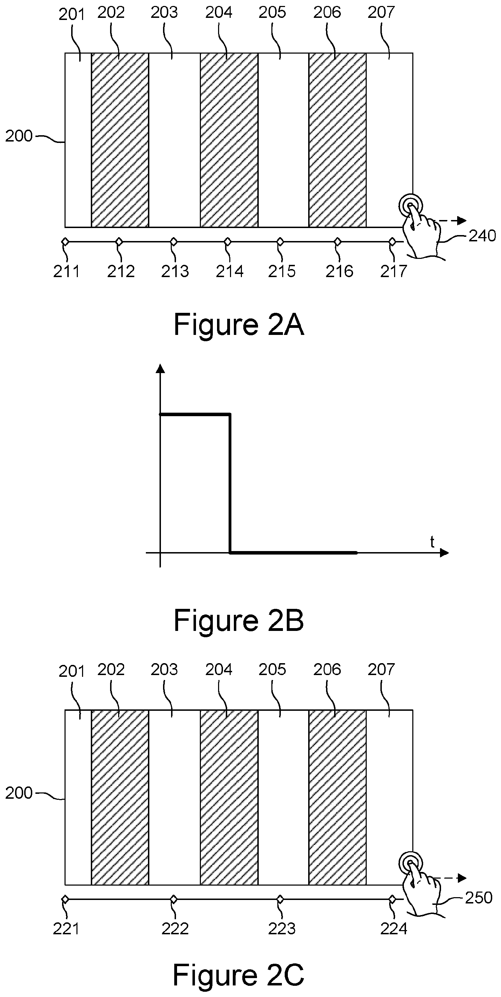

**Figure 2A** illustrates an example of haptic texture bumpmap according to the prior art. The proposed haptic file format allows to convey haptic texture information in maps that are images comprising haptic data instead of RGB values. Using textures to describe haptic properties allows to leverage capabilities of 3D engine to map textures to 3D objects. Multiple haptic maps can be associated with a single object (friction, thermal, hardness, etc.). Although these maps will enable the rendering of haptic textures or haptic surfaces, they will also bring their specific issues. Indeed, a haptic texture provides information at a given point in space. This corresponds for example to the location where the finger touches the tactile screen. The haptic information is thus delivered at the rate of the user (finger) tracking, as illustrated in the figure.

The figure 2A illustrates a 250 pixels wide image 200 where three areas are associated with haptic feedback determined by a texture bumpmap. This bumpmap defines areas 201, 203, 205, 207 represented in white ("0" value) as holes and areas 204, 204, 206 represented in black ("255" value) as bumps. Therefore, such haptic texture allows a user sliding his finger 240 over the area to feel a succession of bumps and holes while sliding from left to right. The haptic rendering may be performed by vibrations, electrostimulation or a force-feedback device attached to a screen. Figure 2B represent the one-dimensional signal that could be used to represent the haptic texture presented in Figure 2A.

For the sake of simplicity, in figure 2A, the user tracking is set at 1Hz, and the user is moving at 30px/s over the image. Elements 211 to 217 represents the tracking (i.e., scanning, sampling) of the user's finger throughout the image according to the finger movement and to the tracking rate. If the user moves faster, the expected feedback would be a faster succession of bumps and holes. However, due to the limit of the tracking system, the sample points selected on the texture may lead to uncanny rendering as illustrated in figure 2C.

**Figure 2C** illustrates an example of uncanny rendering scenario in the context of figure 2A. In this example, the user is moving his finger 250 over the image at 60px/s, much faster than in the previous figure and therefore, with the same scanning rate, the user tracking only sense elements 221, 222, 223 and 224. In this context, the finger position is only detected on the parts 201, 203, 205, 207 of the texture, representing the holes. Thus, the haptic rendering will be uniform, similarly as if the user had touched completely a flat (completely white) surface although the black lines corresponding to the bumps have been crossed.

This type of haptic rendering technique is called Surface Haptic Object (SHO) and typically relies on discrete 2D grayscale textures. The principle remains the same for 1D textures. With this method, the rendering of the haptic texture is based on the position of the finger on the texture and therefore depends on the hardware tracking rate.

To address this issue another method called Surface Haptic Texture (SHT) may be used. It is based on using the finger's velocity instead of its position. With this method, the position of the finger is only used to re-estimate the velocity. Given the velocity, the rendering loop no longer relies on the tracking frequency, and it becomes possible to render haptic textures at high frequency with reasonable accuracy. This type of method was conceived more specifically to be used with one dimensional periodic haptic textures (as illustrated in figure 2A and 2B), which makes the solution extremely memory efficient since a single period needs to be store.

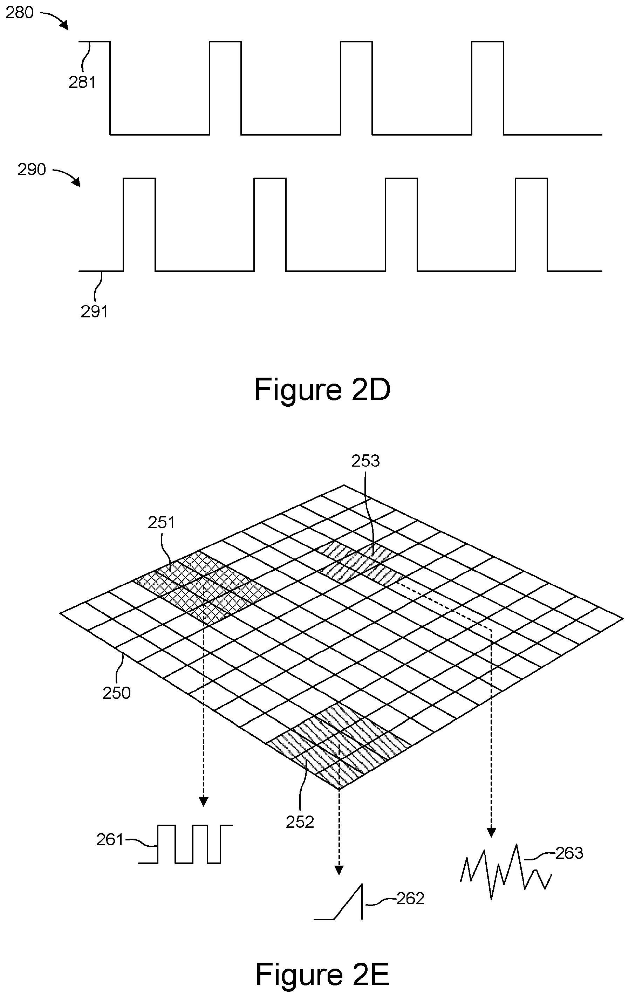

**Figure 2D** illustrates the rendering of a haptic texture with the SHO and SHT methods. The SHT method is limited on two aspects. First, this type of signal limits the rendering to textures composed of a single periodic element. And second, since the rendering only depends on the velocity, it does not account for the initial finger position which may result in shift of the signal. The figure illustrates the rendering of the same haptic textures with an input signal as shown in figure 2C and using the SHO method 280 and the SHT method 290. While the SHT started the rendering at the beginning of the period 281, the SHO used the initial finger position 291 to adequately render the texture. While this type of signal shift may be unnoticeable for some high frequency haptic textures, it may be problematic for others.

**Figure 2E** illustrates the principle of a set of taxels providing a spatial approach to the SHT method. A taxel determines a shaped area of the texture to which a haptic signal is associated. For example, the area 251 is associated with the signal 261. When the user passes his finger over this area 251, he should feel the haptic effect defined by the signal 261. At the rendering stage, the finger position is detected in the determined area and the corresponding effect is rendered according to the current user's speed using the SHT method. In other words, the playback speed of the haptic signal is determined by the velocity of the interaction. For example, a higher velocity will affect the playback of the haptic signals resulting in a signal 261 with higher frequency, and a signal 262 with steeper and shorter ramp. This solution merges the advantages of SHO and SHT methods by offering a spatial based approach that uses the velocity information for the rendering. 2D textures can be partially addressed with this method by using multiple 1D signals assigned to different directions (typically X and Y), carried over different tracks for example. This solution however only works for periodic signals.

The SHO, SHT and taxel-based methods introduced above are complementary and have their own advantages and drawbacks. The current format described hereunder allows to use these three rendering methods.

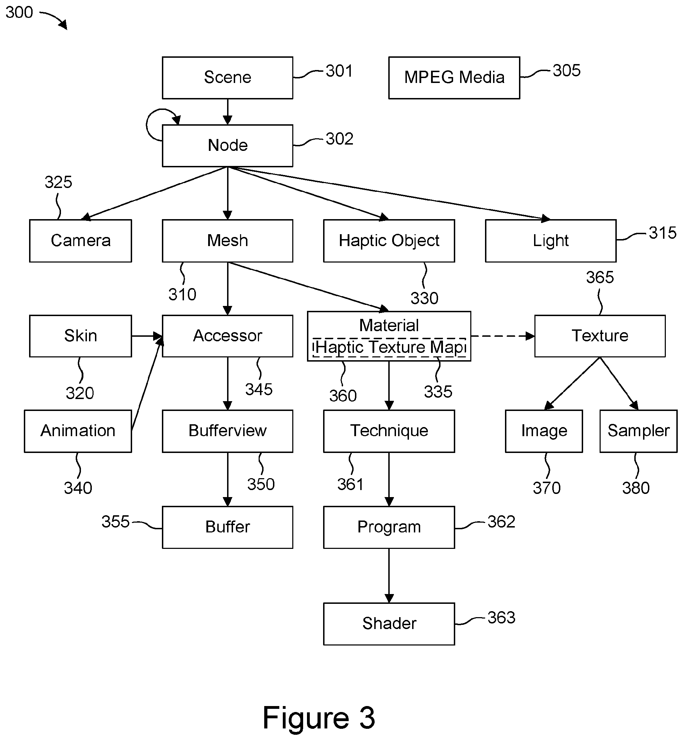

**Figure 3** illustrates an example of data structure of an immersive scene description according to at least one embodiment. This embodiment is based on the glTF^{™} file format. The core of glTF^{™} is a JSON file that describes the structure and composition of a scene containing 3D models. The figure shows the relationship between the elements composing this data structure of an immersive scene description 300. In this context, a scene 301 is the top-level element gathering all the other elements. It comprises an array of nodes. Each node 302 can contain child nodes allowing to create a hierarchy. A node may refer to a mesh or camera or skin and a local geometrical transform may be associated with the node. A mesh 310 corresponds to the geometry data required to render the mesh. A skin 320 is used to perform vertex skinning to let vertices of a mesh be influenced by the bones of a skeleton based on its pose. A camera 325 determines a projection matrix. A light 315 determines the lighting properties associated with the node. Buffers 355 contain the data used for the geometry of 3D models, animations, and skinning. BufferViews 350 add structural information to the buffer data, while accessor 345 define the exact type and layout of BufferViews. Material 360 determines how an object should be rendered based on physical material properties. Texture 365 allows to define the appearance of an object. Images 370 define the image data used for a texture while a sampler 380 describes the wrapping and scaling of textures.

The immersive scene description file further comprises a haptic object 330 that describes a haptic effect to be rendered. The haptic object, identified in the file format as "MPEG_Haptic", may be associated with a haptic texture map 335, identified in the file format syntax described below as "MPEG_material_haptic". Data of haptic texture maps may be stored along with the conventional textures 365. Taxels introduced in figure 2E may be carried through the use of haptic textures referencing a set of haptic signals so that different areas of the textures may be associated with different haptic effects. Haptic textures attached to the node may also be rendered directly with the SHT method for instance.

These elements of a glTF^{™} file allow to define an immersive scene with haptic feedback.

Table 1 describes the MPEG_haptic extension corresponding to element 330 of figure 3. It is composed of an array of references to haptic media sources (any haptic media file may be used, for example the signals 261, 262, 263 of figure 2E). This extension is attached to a node and can be used to trigger haptic effects based on user interactions with this node for instance.

**Table 1: MPEG_haptic extension**

| **Name** | **Type** | **Default** | **Description** |
|---|---|---|---|
| Media Reference | Array(number) | N/A | A reference to one or more Haptic media sources. |

Table 2 describes the MPEG_material_haptic extension corresponding to element 360 of figure 3. It is used to describe haptic textures to describe the haptic properties of the node. For example, a temperature texture map may be used to determine the temperature to be rendered in a subset of the surface of the object (for example a metallic part is colder than a plastic part) and a stiffness texture map may be used to indicate that the a subset of the surface corresponding to the metallic part of the object is rigid while the subset of the surface corresponding to plastic part (i.e. rubber) is soft. Haptic texture maps allow to define different parameters for different haptic properties of specific areas of the 3D object.

**Table 2: MPEG_material_haptic extension**

| **Name** | **Type** | **Default** | **Description** |
|---|---|---|---|
| Stiffness | ref<textureInfo> | NULL | Indicates the perceived stiffness of a surface, i.e., the force perceived by the user opposed to the normal penetration of a material by a body part. It is described with a 2D texture storing the stiffness coefficients. The texture may store directly the coefficient or references to Haptic media sources. |
| | | | The suggested rendering model is: |
| | | | F = kx where k is the value of stiffness for the displacement x along the mpeg _haptic asset stiffness function. This model is valid for an isotropic material. |
| Friction | ref<textureInfo> | NULL | Indicates the perceived friction, which is a force opposing the movement of a body part sliding on a surface. |
| | | | It is described with a 2D texture storing the coefficient of friction. |
| | | | The suggested rendering model is: |
| | | | F_f = mu * Fn where mu is the coefficient of friction, and Fn is the normal applied force by the body part on the surface. |
| Vibrotactile Texture | ref<textureInfo> | NULL | Indicates the perceived texture by a body part while sliding on a surface. |
| | | | It is described with a 2D texture. The texture may directly store the surface height or references to Haptic media sources. |
| Temperature | ref<textureInfo> | NULL | Indicates the perceived temperature of an object. It is described with a 2D texture storing the temperature distribution. |
| Vibration | ref<textureInfo> | NULL | Indicates a vibration signal described with reference to a Haptic media source. It is described with a 2D texture storing the Haptic material. |
| Custom | ref<textureInfo> | NULL | Texture containing custom haptic data. |

Table 3 describes the bit depth and value range of the different haptic textures.

**Table 3: Bit depth and value range for haptic textures**

| **Haptic map** | **Format** | **Range** | **Resolution** |
|---|---|---|---|
| Stiffness | 8-bit | 0-10000 N.s ⁻¹ /m.s ⁻¹ | 40 N.s ⁻¹ /m.s ⁻¹ |
| Friction | 8-bit | ±5 | 0.04 |
| Vibrotactile Texture | 8-bit | ±10 | 0.08 mm |
| Temperature | 8-bit | [-50:+75]° C | 0.5° C |
| Custom | 8-bit | 0-255 | 1 |

This format however does not allow to identify the type of texture being used, i.e how it should be rendered. Therefore, it would be impossible for a haptic rendering device to interpret the texture appropriately. Additionally, the bit depth and value ranges are defined for each type of texture as shown in Table 3. Thus, these parameters are constant, for example predetermined in a common specification for interoperability purposes and cannot be adapted to different situations.

Embodiments described hereafter have been designed with the foregoing in mind and propose to introduce an additional information field to identify the type of rendering associated with haptic textures in the data structure of figure 3 allowing to differentiate between conventional haptic textures for which a pixel directly represents the value of the haptic effect and haptic textures for which a pixel of the texture references a corresponding haptic signal. Such embodiment allows to use a common representation to describe haptic textures through different methods. It overcomes limitations of the different approaches and thus provides better flexibility.

A first embodiment uses a Boolean to differentiate between types of rendering associated with textures in the data structure. In a second embodiment, an additional field allows to specify more precisely how to interpret the texture. Typically, a haptic rendering system may conform to a common specification for interoperability that may define several sets of bit depth and ranges for a haptic property and the additional field will specify which configuration to use. By allowing the use of textures with different representations or resolutions, such embodiment solves the issue related to the tracking mentioned above in reference to figure 2C. In a third embodiment it is proposed to use arrays of textures. This allows to provide the same texture with different configurations and resolutions (either different types or different bit depth and ranges), thus allowing the haptic rendering device to choose the most appropriate texture depending on the device capabilities.

These embodiments provide haptic device and authoring tools interoperability, allow to adapt rendering of haptic textures based on capabilities of the haptic rendering device and are compatible with existing haptic texture representations and existing haptic rendering methods.

According to the first embodiment, Boolean information is associated with a texture and determines how to interpret it. When this Boolean information is true, the associated texture should be interpreted as a reference to the haptic signal and thus each pixel value of the texture corresponds to an index in the Media Reference array of the MPEG_Haptic extension, allowing to obtain a haptic signal for the haptic object. This haptic signal may then be rendered for example according to the velocity of the user as described in figures 2D and 2E. Otherwise, the texture is used as a traditional 2D haptic texture and thus each pixel value of the texture corresponds directly to a value for rendering the haptic effect.

This first embodiment is implemented in an immersive scene description (300 in figure 3) comprising haptic effects using the elements of the MPEG_material_haptic description of Table 4 that conforms to the associated JSON schema of Table 5.

**Table 4: First embodiment of the MPEG_material_haptic description**

| **Name** | **Type** | **Default** | **Description** |
|---|---|---|---|
| stiffness | ref<textureInfo> | NULL | It determines the perceived stiffness of a surface. Which means the force perceived by the user opposed to the normal penetration of a material by a body part. |
| | | | It is described with a 2D texture storing the stiffness coefficients. The texture may store directly the coefficient or references to Haptic media sources. |
| | | | The suggested rendering model is : |
| | | | F = kx where k is the value of stiffness for the displacement x along the mpeg_haptic asset stiffness function. This model is valid for an isotropic material. |
| stiffness_reference | boolean | FALSE | Indicates if the Stiffness texture references haptic media sources. If true, values contained in the texture should be interpreted as indices in the MediaReference array of the MPEG_haptic extension. |
| friction | ref<textureInfo> | NULL | It indicates the perceived friction, which is a force opposing the movement of a body part sliding on a surface. |
| | | | It is described with a 2D texture storing the coefficient of friction. |
| | | | The suggested rendering model is: |
| | | | F_f = mu * Fn where mu is the coefficient of friction, and Fn is the normal applied force by the body part on the surface. |
| friction_reference | boolean | FALSE | Indicates if the Friction texture references haptic media sources. If true, values contained in the texture should be interpreted as indices in the MediaReference array of the MPEG_haptic extension. |
| vibrotactile_texture | ref<textureInfo> | NULL | It indicates the perceived texture by a body part while sliding on a surface. |
| | | | It is described with a 2D texture. The texture may store directly the surface height or references to Haptic media sources. |
| vibrotactiel_texture_r eference | boolean | FALSE | Indicates if the Vibrotactile Texture texture references haptic media sources. If true, values contained in the texture should be interpreted as indices in the MediaReference array of the MPEG_haptic extension. |
| temperature | ref<textureInfo> | NULL | It indicates the perceived temperature of an object. |
| | | | It is described with a 2D texture storing the temperature distribution. The value is stored in an 8-bit int with a temperature from -50 C to + 75 C with a resolution of 0.5 C |
| temperature_referenc e | boolean | FALSE | Indicates if the temperature texture references haptic media sources. If true, values contained in the texture should be interpreted as indices in the MediaReference array of the MPEG_haptic extension. |
| vibration | ref<textureInfo> | NULL | It indicates a vibration signal described with a reference to a Haptic media source. It is described with a 2D texture storing the Haptic material. |
| vibration_reference | boolean | FALSE | Indicates if the Vibration texture references haptic media sources. If true, values contained in the texture should be interpreted as indices in the MediaReference array of the MPEG_haptic extension. |
| custom | ref<textureInfo> | NULL | Texture containing custom haptic data. |
| custom_reference | boolean | FALSE | Indicates if the Custom texture references haptic media sources. If true, values contained in the texture should be interpreted as indices in the MediaReference array of the MPEG _haptic extension. |

**Table 5: JSON schema for the first embodiment**

| |
|---|
| ``` { "$schema": "http://json-schema.org/draft-04/schema", "title": "MPEG _material_haptic", "type": "object", "description": "A haptic material.", "allOf": [ { "$ref": "glTFChildOfRootProperty.schema.json" } ], "properties": { "stiffness": { "allOf": [ { "$ref": "textureInfo.schema.json" } ], "description": "A stiffness material.", "gltf_detailedDescription": "Stiffness texture described with a 2D texture storing the stiffness coefficients." } "stiffness _reference": { "type": "boolean", "description": "Indicates if the Stiffness textures references haptic media sources.", "gltf_detailedDescription": "Indicates if the Stiffness texture references haptic media sources. If true, values contained in the texture should be interpreted as indices in the MediaReference array of the MPEG_haptic extension." }, "friction": { "allOf": [ { "$ref": " textureInfo.schema.json" } ], "description": "A friction material.", "gltf_detailedDescription": "Friction texture described with a 2D texture storing the coefficient of friction." }, "friction _reference": { "type": "boolean", ``` |
| ``` "description": "Indicates if the friction texture references haptic media sources." }, "vibrotactile _texture": { "allOf": [ { "$ref": "textureInfo.schema.json" } ], "description": "A vibrotactile texture material.", "gltf_detailedDescription": "It is described with a 2D texture. The texture may store directly the surface height or references to Haptic media sources." }, "vibrotactile_texture_reference": { "type": "boolean", "description": "Indicates if the Vibrotactile Texture texture references haptic media sources.", "gltf_detailedDescription": "Indicates if the Vibrotactile Texture texture references haptic media sources. If true, values contained in the texture should be interpreted as indices in the MediaReference array of the MPEG_haptic extension." }, "temperature": { "allOf": [ { "$ref": "textureInfo.schema.json" } ], "description": "The temperature texture.", "gltf_detailedDescription": "Temperature described with a 2D texture storing the temperature distribution" }, "temperature_reference": { "type": "boolean", "description": "Indicates if the temperature texture references haptic media sources." }, "vibration": { "type": "string", "description": "Vibration haptic material.", "gltf_detailedDescription": "Vibration texture signal described with a reference to a Haptic media source." }, "vibration _reference": { "type": "boolean", "description": "Indicates if the Vibration texture references haptic media sources.", "gltf_detailedDescription": "Indicates if the Vibration texture references haptic media sources. If true, values contained in the texture should be interpreted as indices in the MediaReference array of the MPEG_haptic extension." }, "custom": { "allOf": [ { "$ref": "textureInfo.schema.json" } ], "description": "Custom texture.", "gltf_detailedDescription": "Texture containing custom haptic data" }, "custom _reference": { "type": "boolean", "description": "Indicates if the custom texture references haptic media sources." }, "name": { }, "extensions": { }, "extras": { } } } ``` |

According to the second embodiment, enumerated information is associated with a texture and determines how to interpret it. The information specifies if the haptic texture uses conventional 2D haptic textures or is used to reference a haptic signal from a set of haptic signals and also specifies the bit depth and value ranges of these haptic textures.

Two variants of this embodiment are proposed: the enumerated information may be carried as an integer or a string. Indeed, these are two solutions to specify an enumerated information with the glTF format. In the proposed implementations, the variants of the second embodiment use the same enumerated information for all haptic properties but the enumerated information could also be different for each type of property (for example with additional bit depth and value ranges configurations).

The first variant of the second embodiment uses a string to describe how to interpret the haptic texture. This variant embodiment is for example implemented in an immersive scene description comprising haptic effects using the elements of the MPEG_material_haptic description of Table 6 that conforms to the associated JSON schema of Table 7. In these tables, enumerated information is added to each haptic property. If set to "Reference", the associated texture should be interpreted as carrying references to haptic signals to be rendered, where each pixel value corresponds to an index in the Media Reference array of the MPEG_Haptic extension. Haptic signals may then be obtained from the Media Reference. In at least one embodiment, haptic signals obtained using a media reference are rendered for example according using the velocity-based technique of figure 2E. If set to "High_Resolution" the texture can be used as a traditional 2D texture with the associated bit depth and value ranges detailed in the specifications.

**Table 6: First variant of second embodiment for the MPEG_material_haptic extension**

| **Name** | **Type** | **Default** | **Description** |
|---|---|---|---|
| stiffness | ref<textureInfo> | NULL | It determines the perceived stiffness of a surface. Which means the force perceived by the user opposed to the normal penetration of a material by a body part. |
| | | | It is described with a 2D texture storing the stiffness coefficients. The texture may directly store the coefficient or references to Haptic media sources. |
| | | | The suggested rendering model is : |
| | | | F = kx where k is the value of stiffness for the displacement x along the mpeg _haptic asset stiffness function. This model is valid for an isotropic material. |
| stiffness_type | String | High_Re solution | Indicates the type of stifness texture. |
| friction | ref<textureInfo> | NULL | It indicates the perceived friction, which is a force opposing the movement of a body part sliding on a surface. |
| | | | It is described with a 2D texture storing the coefficient of friction. |
| | | | The suggested rendering model is: |
| | | | F_f = mu * Fn where mu is the coefficient of friction, and Fn is the normal applied force by the body part on the surface. |
| friction_type | String | High_ Resolution | Indicates the type of friction texture. |
| Vibrotactile_te xture | ref<textureInfo> | NULL | It indicates the perceived texture by a body part while sliding on a surface. |
| | | | It is described with a 2D texture. The texture may store directly the surface height or references to Haptic media sources. |
| vibrotactile_tex ture_type | String | High_ Resolution | Indicates the type of vibrotactile texture. |
| temperature | ref<textureInfo> | NULL | It indicates the perceived temperature of an object. It is described with a 2D texture storing the temperature distribution. The value is stored in an 8-bit int with a temperature from -50 C to + 75 C with a resolution of 0.5 C |
| temperature_ty pe | String | High_Re solution | Indicates the type of temperature texture. |
| vibration | ref<textureInfo> | NULL | It indicates a vibration signal described with a reference to a Haptic media source. It is described with a 2D texture storing the Haptic material. |
| vibration_type | String | High_Re solution | Indicates the type of vibration texture. |
| custom | ref<textureInfo> | NULL | Texture containing custom haptic data. |

**Table 7: JSON schema for first variant of the second embodiment**

| |
|---|
| ``` { "$schema": "http://json-schema.org/draft-04/schema", "title": "MPEG _material_haptic", "type": "object", "description": "A haptic material.", "allOf": [ { "$ref": "glTFChildOfRootProperty.schema.json" } ], "properties": { ``` |
| ``` "stiffness": { "allOf": [ { "$ref": "textureInfo.schema.json" } ], "description": "A stiffness material.", "gltf_detailedDescription": "Stiffness texture described with a 2D texture storing the stiffness coefficients." }, "stiffness_type": { "type": "string", "enum": ["High _Resolution", "Low _Resolution", "Reference", "Other"], "description": "Indicates the type of stiffness texture" "default": "High_Resolution" }, "friction": { "allOf": [ { "$ref": " textureInfo.schema.json" } ], "description": "A friction material.", "gltf_detailedDescription": "Friction texture described with a 2D texture storing the coefficient of friction." }, "friction _type": { "type": "string", "enum": ["High _Resolution", "Low _Resolution", "Reference", "Other"], "description": "Indicates the type of friction texture" "default": "High_Resolution" }, "vibrotactile _texture": { "allOf": [ { "$ref": "textureInfo.schema.json" } ], "description": "A vibrotactile texture material.", "gltf_detailedDescription": "It is described with a 2D texture. The texture may store directly the surface height or references to Haptic media sources." }, "vibrotactile_texture_type": { "type": "string", "enum": ["High _Resolution", "Low _Resolution", "Reference", "Other"], "description": "Indicates the type of vibrotactile texture", "default": "High_Resolution" }, "temperature": { "allOf": [ { "$ref": "textureInfo.schema.json" } ], "description": "The temperature texture.", "gltf_detailedDescription": "Temperature described with a 2D texture storing the temperature distribution" }, "temperature_type": { "type": "string", "enum": ["High _Resolution", "Low_Resolution", "Reference", "Other"], "description": "Indicates the type of temperature texture", "default": "High_Resolution" }, "vibration": { "type": "string", "description": "Vibration haptic material.", "gltf_detailedDescription": "Vibration texture signal described with a reference to a Haptic media source." }, "vibration _type": { "type": "string", "enum": ["High _Resolution", "Low _Resolution", "Reference", "Other"], "description": "Indicates the type of vibration texture", "default": "High_Resolution" }, "custom": { "allOf": [ { "$ref": "textureInfo.schema.json" } ], "description": "Custom texture.", "gltf_detailedDescription": "Texture containing custom haptic data" }, ``` |
| ``` "custom _type": { "type": "string", "enum": ["High _Resolution", "Low _Resolution", "Reference", "Other"], "description": "Indicates the type of custom texture", "default": "High_Resolution" }, "name": { }, "extensions": { }, "extras": { } } } ``` |

Table 8 gives an example of a texture profile specification where the additional information is set to "Low_Resolution". In this case, the texture can be used as a traditional 2D texture with the associated bit depth and value ranges that would be lower than for the "High_Resolution" version, the values being detailed in the specifications.

**Table 8: Bit depth and value range for low resolution haptic textures**

| **Haptic map** | **Format** | **Range** | **Resolution** |
|---|---|---|---|
| Stiffness | 8-bit | 0-10000 N.s -1 /m.s -1 | 40 N.s -1 /m.s -1 |
| Friction | 8-bit | ±5 | 0.04 |
| Vibrotactile Texture | 8-bit | ±10 | 0.08mm |
| Temperature | 8-bit | [-50:+75]°C | 0.5°C |
| Custom | 8-bit | 0-255 | 1 |

In addition, Table 9 gives another example of a texture profile specification where the additional information is set to "High_Resolution".

**Table 9: Bit depth and value range for high resolution haptic textures**

| **Haptic map** | **Format** | **Range** | **Resolution** |
|---|---|---|---|
| Stiffness | 16-bit | 0-10000 N.s -1 /m.s -1 | 0.15 N.s -1 /m.s -1 |
| Friction | 16-bit | ±100 | 0.003 |
| Vibrotactile Texture | 16-bit | ±100 | 0.0015mm |
| Temperature | 16-bit | [-100:+150]°C | 0.004°C |
| Custom | 16-bit | 0-65536 | 1 |

Although tables 8 and 9 regroup information related to the bit-depth and to the range, two distinct tables could be used for this purpose.

If the additional information is set to "Other" the texture can be used as a traditional 2D texture where the bit depth and value ranges are not standard and would have to be provided to the haptic rendering device. This embodiment could be easily extended to support future types of haptic textures by adding more enum types.

The second variant of the second embodiment is similar to the first variant except that the properties use an integer value instead of a string value to describe how to interpret the haptic texture. The following enumeration shows the correlation with the previous implementation:
enum {High_Resolution=0, Low Resolution=1, Reference=2, Other=3}

This implementation could be easily extended to support future types of haptic textures by adding more enumeration types. This second variant of the second embodiment is for example implemented using the elements of the MPEG_material_haptic description of Table 10 that conforms to the associated JSON schema of Table 11, relying on the same texture profiles as the first variant of the second embodiment (Tables 8 and 9).

**Table 10: Second variant of second embodiment for the MPEG_material_haptic extension**

| **Name** | **Type** | **Default** | **Description** |
|---|---|---|---|
| stiffness | ref<textureInfo> | NULL | It determines the perceived stiffness of a surface. Which means the force perceived by the user opposed to the normal penetration of a material by a body part. |
| | | | It is described with a 2D texture storing the stiffness coefficients. The texture may directly store the coefficient or references to Haptic media sources. |
| | | | The suggested rendering model is : |
| | | | F = kx where k is the value of stiffness for the displacement x along the mpeg _haptic asset stiffness function. This model is valid for an isotropic material. |
| stiffness_type | int | 0 | Indicates the type of stiffness texture. |
| Friction | ref<textureInfo> | NULL | It indicates the perceived friction, which is a force opposing the movement of a body part sliding on a surface. |
| | | | It is described with a 2D texture storing the coefficient of friction. |
| | | | The suggested rendering model is: F_f = mu * Fn where mu is the coefficient of friction, and Fn is the normal applied force by the body part on the surface. |
| friction_type | int | 0 | Indicates the type of friction texture. |
| Vibrotactile_te xture | ref<textureInfo> | NULL | It indicates the perceived texture by a body part while sliding on a surface. |
| | | | It is described with a 2D texture. The texture may directly store the surface height or references to Haptic media sources. |
| vibrotactile_tex ture_type | int | 0 | Indicates the type of vibrotactile texture. |
| temperature | ref<textureInfo> | NULL | It indicates the perceived temperature of an object. |
| | | | It is described with a 2D texture storing the temperature distribution. The value is stored in an 8-bit int with a temperature from -50 C to + 75 C with a resolution of 0.5 C |
| temperature_ty pe | int | 0 | Indicates the type of temperature texture. |
| vibration | ref<textureInfo> | NULL | It indicates a vibration signal described with a reference to a Haptic media source. |
| | | | It is described with a 2D texture storing the Haptic material. |
| vibration_type | int | 0 | Indicates the type of vibration texture. |
| custom | ref<textureInfo> | NULL | Texture containing custom haptic data. |

**Table 11: JSON schema for second variant of the second embodiment**

| |
|---|
| ``` { "$schema": "http://json-schema.org/draft-04/schema", "title": "MPEG _material_haptic", "type": "object", "description": "A haptic material.", "allOf": [ { "$ref": "glTFChildOfRootProperty.schema.json" } ], "properties": { "stiffness": { "allOf": [ { "$ref": "textureInfo.schema.json" } ], "description": "A stiffness material.", "gltf_detailedDescription": "Stiffness texture described with a 2D texture storing the stiffness coefficients." }, "stiffness _type": { "anyOf": [ { "enum": [ 0 ], "High_Resolution": "High resolution 2D texture." }, { "enum": [ 1 ], ``` |
| ``` "Low_Resolution": "Low resolution 2D texture." }, { "enum": [ 2 ], "Reference": "Taxel map referencing haptic media." }, { "enum": [ 3 ], "Other": "Other type of haptic texture." }, { "type": "integer" } ] "description": "Indicates the type of stiffness texture", "default": "0" }, "friction": { "allOf": [ { "$ref": " textureInfo.schema.json" } ], "description": "A friction material.", "gltf_detailedDescription": "Friction texture described with a 2D texture storing the coefficient of friction." }, "vibrotactile _texture": { "allOf": [ { "$ref": "textureInfo.schema.json" } ], "description": "A vibrotactile texture material.", "gltf_detailedDescription": "It is described with a 2D texture. The texture may store directly the surface height or references to Haptic media sources." }, "vibrotactile texture_type": { "anyOf": [ { "enum": [ 0 ], "High_Resolution": "High resolution 2D texture." }, { "enum": [ 1 ], "Low _Resolution": "Low resolution 2D texture." }, { "enum": [ 2 ], "Reference": "Taxel map referencing haptic media." }, { "enum": [ 3 ], "Other": "Other type of haptic texture." }, { "type": "integer" } ] "description": "Indicates the type of vibrotactile texture", "default": "0" }, "temperature": { "allOf": [ { "$ref": "textureInfo.schema.json" } ], "description": "The temperature texture.", "gltf_detailedDescription": "Temperature described with a 2D texture storing the temperature distribution" }, "temperature _type": { "anyOf": [ { "enum": [ 0 ], "High_Resolution": "High resolution 2D texture." ``` |
| ``` }, { "enum": [ 1 ], "Low_Resolution": "Low resolution 2D texture." }, { "enum": [ 2 ], "Reference": "Taxel map referencing haptic media." }, { "enum": [ 3 ], "Other": "Other type of haptic texture." }, { "type": "integer" } ] "description": "Indicates the type of temperature texture", "default": "0" }, "vibration": { "type": "string", "description": "Vibration haptic material.", "gltf_detailedDescription": "Vibration texture signal described with a reference to a Haptic media source." }, "vibration _type": { "anyOf": [ { "enum": [ 0 ], "High_Resolution": "High resolution 2D texture." }, { "enum": [ 1 ], "Low _Resolution": "Low resolution 2D texture." }, { "enum": [ 2 ], "Reference": "Taxel map referencing haptic media." }, { "enum": [ 3 ], "Other": "Other type of haptic texture." }, { "type": "integer" } ] "description": "Indicates the type of vibration texture", "default": "0" }, "custom": { "allOf": [ { "$ref": "textureInfo.schema.json" } ], "description": "Custom texture.", "gltf_detailedDescription": "Texture containing custom haptic data" }, "custom _type": { "anyOf": [ { "enum": [ 0 ], "High_Resolution": "High resolution 2D texture." }, { "enum": [ 1 ], "Low _Resolution": "Low resolution 2D texture." }, ``` |
| ``` { "enum": [ 2 ], "Reference": "Taxel map referencing haptic media." }, { "enum": [ 3 ], "Other": "Other type of haptic texture." }, { "type": "integer" } ] "description": "Indicates the type of custom texture", "default": "0" }, "name": { }, "extensions": { }, "extras": { } } } ``` |

According to the third embodiment, arrays of texture are used to determine how to interpret the haptic texture. With this embodiment, it is possible to specify multiple textures for a single property, with potentially different type of haptic texture and let the rendering device select the appropriate representation. This last embodiment allows to create haptic experiences compatible with different devices offering different capabilities.

This last embodiment is illustrated using a string enumeration, but other implementations could use an integer enumeration or a Boolean to only distinguish reference-based representations and conventional 2D textures. The specifications of this embodiment are detailed in Table 12 and the associated JSON schema is provided in Table 13.

**Table 12: Third embodiment for the MPEG_material_haptic extension**

| **Name** | **Type** | **Default** | **Description** |
|---|---|---|---|
| stiffness | array<textureInfo> | NULL | It determines the perceived stiffness of a surface. Which means the force perceived by the user opposed to the normal penetration of a material by a body part. |
| | | | It is described with a 2D texture storing the stiffness coefficients. The texture may directly store the coefficient or references to Haptic media sources. |
| | | | The suggested rendering model is : |
| | | | F = kx where k is the value of stiffness for the displacement x along the mpeg_haptic asset stiffness function. This model is valid for an isotropic material. |
| stiffness_type | array<string> | NULL | Indicates the type of stiffness texture. |
| friction | array<textureInfo> | NULL | It indicates the perceived friction, which is a force opposing the movement of a body part sliding on a surface. |
| | | | It is described with a 2D texture storing the coefficient of friction. |
| | | | The suggested rendering model is: |
| | | | F_f = mu * Fn where mu is the coefficient of friction, and Fn is the normal applied force by the body part on the surface. |
| friction_type | array<string> | NULL | Indicates the type of friction texture. |
| Vibrotactile_te xture | array<textureInfo> | NULL | It indicates the perceived texture by a body part while sliding on a surface. |
| | | | It is described with a 2D texture. The texture may directly store the surface height or references to Haptic media sources. |
| vibrotactile_tex ture_type | array<string> | NULL | Indicates the type of vibrotactile texture. |
| temperature | array<textureInfo> | NULL | It indicates the perceived temperature of an object. |
| | | | It is described with a 2D texture storing the temperature distribution. The value is stored in an 8-bit int with a temperature from -50 C to + 75 C with a resolution of 0.5 C |
| temperature_ty pe | array<string> | NULL | Indicates the type of temperature texture. |
| vibration | array<textureInfo> | NULL | It indicates a vibration signal described with a reference to a Haptic media source. |
| | | | It is described with a 2D texture storing the Haptic material. |
| vibration_type | array<string> | NULL | Indicates the type of vibration texture. |
| custom | array<textureInfo> | NULL | Texture containing custom haptic data. |

**Table 13: JSON schema for the third embodiment**

| |
|---|
| ``` { "$schema": "http://json-schema.org/draft-04/schema", "title": "MPEG _material_haptic", "type": "object", "description": "A haptic material.", "allOf": [ { "$ref": "glTFChildOfRootProperty.schema.json" } ], "properties": { ``` |
| ``` "stiffness": { "type": "array", "items": { "allOf": [ { "$ref": "textureInfo.schema.json" } ], "description": "A stiffness material.", "gltf_detailedDescription": "Stiffness texture described with a 2D texture storing the stiffness coefficients." } }, "stiffness _type": { "type": "array", "items": { "type": "string", "enum": ["High_Resolution", "Low_Resolution", "Reference", "Other"], "description": "Indicates the type of stiffness texture" "default": "High_Resolution" } }, "friction": { "type": "array", "items": { "allOf": [ { "$ref": " textureInfo.schema.json" } ], "description": "A friction material.", "gltf_detailedDescription": "Friction texture described with a 2D texture storing the coefficient of friction." } }, "friction _type": { "type": "array", "items": { "type": "string", "enum": ["High_Resolution", "Low_Resolution", "Reference", "Other"], "description": "Indicates the type of friction texture" "default": "High_Resolution" } }, "vibrotactile _texture": { "type": "array", "items": { "allOf": [ { "$ref": "textureInfo.schema.json" } ], "description": "A vibrotactile texture material.", "gltf_detailedDescription": "It is described with a 2D texture. The texture may store directly the surface height or references to Haptic media sources." } }, "vibrotactile_texture_type": { "type": "array", "items": { "type": "string", "enum": ["High_Resolution", "Low_Resolution", "Reference", "Other"], "description": "Indicates the type of vibrotactile texture", "default": "High_Resolution" } }, "temperature": { "type": "array", "items": { "allOf": [ { "$ref": "textureInfo.schema.json" } ], "description": "The temperature texture.", "gltf_detailedDescription": "Temperature described with a 2D texture storing the temperature distribution" } ``` |
| ``` }, "temperature _type": { "type": "array", "items": { "type": "string", "enum": ["High_Resolution", "Low_Resolution", "Reference", "Other"], "description": "Indicates the type of temperature texture", "default": "High_Resolution" } }, "vibration": { "type": "array", "items": { "type": "string", "description": "Vibration haptic material.", "gltf_detailedDescription": "Vibration texture signal described with a reference to a Haptic media source." } }, "vibration _type": { "type": "array", "items": { "type": "string", "enum": ["High_Resolution", "Low_Resolution", "Reference", "Other"], "description": "Indicates the type of vibration texture", "default": "High_Resolution" } }, "custom": { "type": "array", "items": { "allOf": [ { "$ref": "textureInfo.schema.json" } ], "description": "Custom texture.", "gltf_detailedDescription": "Texture containing custom haptic data" } }, "custom _type": { "type": "array", "items": { "type": "string", "enum": ["High_Resolution", "Low_Resolution", "Reference", "Other"], "description": "Indicates the type of custom texture", "default": "High_Resolution" } }, "name": { }, "extensions": { }, "extras": { } } } ``` |

Such implementation uses one array for each haptic property and one array for each associated texture type. A variant implementation uses a single array containing pairs of textures and type. The JSON schema of such variant is given in Table 14.

**Table 14: JSON schema for a variant implementation of the third embodiment**

| |
|---|
| ``` { "$schema": "http://json-schema.org/draft-04/schema", "title": "MPEG_material_haptic", "type": "object", "description": "A haptic material.", "allOf": [ { "$ref": "glTFChildOfRootProperty.schema.json" } ], "properties": { "stiffness": { "type": "array", "items": { "type":"object", "properties":{ "texture": { "allOf": [ { "$ref": "textureInfo.schema.json" } ], "description": "A stiffness material.", "gltf_detailedDescription": "Stiffness texture described with a 2D texture storing the stiffness coefficients." }, "type": { "type": "string", "enum": ["High_Resolution", "Low _Resolution", "Reference", "Other"], "description": "Indicates the type of stiffness texture" "default": "High_Resolution" } } } }, "friction": { "type": "array", "items": { "type":"object", "properties":{ "texture": { "allOf": [ { "$ref": "textureInfo.schema.json" } ], "description": "A friction material.", "gltf_detailedDescription": "Friction texture described with a 2D texture storing the coefficient of friction." }, "type": { "type": "string", "enum": ["High_Resolution", "Low _Resolution", "Reference", "Other"], "description": "Indicates the type of haptic texture" "default": "High_Resolution" } } } }, "vibrotactile _texture": { "type": "array", "items": { "type":"object", "properties":{ "texture": { "allOf": [ { "$ref": "textureInfo.schema.json" } ], "description": "A vibrotactile texture material.", "gltf_detailedDescription": "It is described with a 2D texture. The texture may store directly the surface height or references to Haptic media sources." }, "type": { "type": "string", "enum": ["High_Resolution", "Low _Resolution", "Reference", "Other"], ``` |
| ``` "description": "Indicates the type of haptic texture" "default": "High_Resolution" } } } }, "temperature": { "type": "array", "items": { "type":"object", "properties":{ "texture": { "allOf": [ { "$ref": "textureInfo.schema.json" } ], "description": "A temperature material.", "gltf_detailedDescription": "Temperature described with a 2D texture storing the temperature distribution" }, "type": { "type": "string", "enum": ["High_Resolution", "Low _Resolution", "Reference", "Other"], "description": "Indicates the type of haptic texture" "default": "High_Resolution" } } } }, "vibration": { "type": "array", "items": { "type":"object", "properties":{ "texture": { "allOf": [ { "$ref": "textureInfo.schema.json" } ], "description": "A vibration material.", "gltf_detailedDescription": "Vibration texture signal described with a reference to a Haptic media source." }, "type": { "type": "string", "enum": ["High_Resolution", "Low _Resolution", "Reference", "Other"], "description": "Indicates the type of haptic texture" "default": "High_Resolution" } } } }, "custom": { "type": "array", "items": { "type":"object", "properties":{ "texture": { "allOf": [ { "$ref": "textureInfo.schema.json" } ], "description": "A custom material.", "gltf_detailedDescription": "Texture containing custom haptic data" }, "type": { "type": "string", "enum": ["High_Resolution", "Low _Resolution", "Reference", "Other"], "description": "Indicates the type of haptic texture" "default": "High_Resolution" } ``` |
| ``` } } }, "name": { }, "extensions": { }, "extras": { } } } ``` |

When a haptic material property contains multiple texture with different type of data representation (i.e. High Resolution, Low Resolution, Reference and Other), it is up to the haptic rendering device to decide which texture to use. For instance, if the Stiffness property contains both a High_Resolution texture and a Low_Resolution texture, the haptic rendering device can decide which texture to use based on the capacities of the rendering device. If the rendering device has a resolution lower than the one defined in Table 8, the Low_Resolution texture can be used. Otherwise, if no information on the device capabilities is available, the haptic rendering device can use the first Texture in the array as the default one.

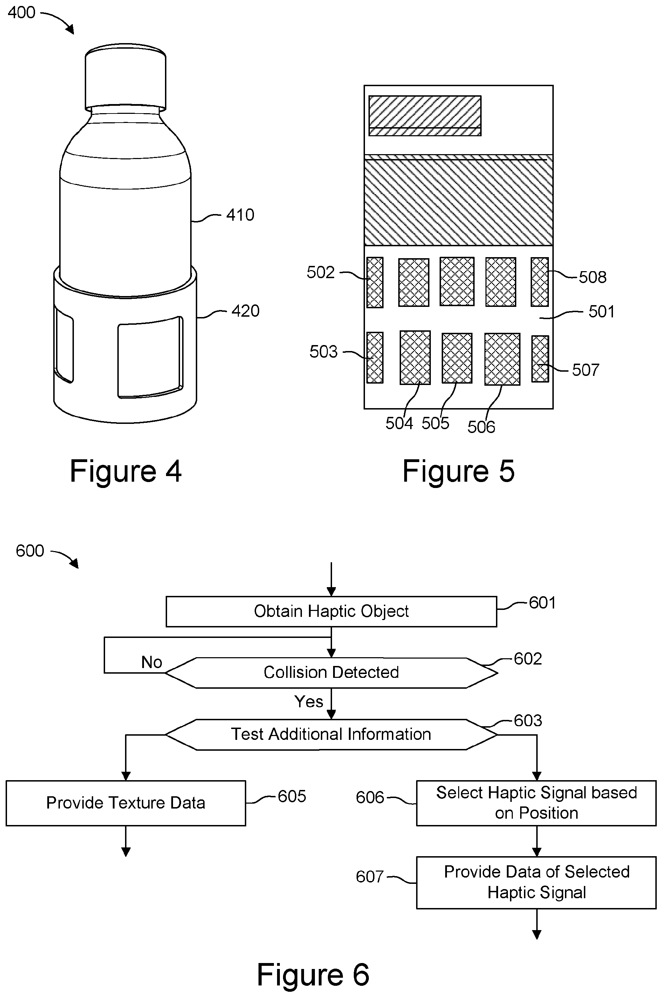

**Figure 4** illustrates an example of 3D object according to at least one embodiment. The representation of the 3D object 400 comprising a metallic bottle 410 with a rubber protection 420. This object is specified in a glTF file formatted according to the data structure of figure 3. Additional files are used to define the different elements of the bottle; a binary file for the mesh, multiple texture files for different elements such as color, light, normal, occlusion, etc. A physical-based rendering uses data of these files to reconstruct a realistic visual aspect of the bottle.

In addition, according to one of the embodiments described above, additional textures for haptics are provided to enhance the immersive experience associated with the bottle.

**Figure 5** illustrates a haptic texture used as friction map for the bottle. With such haptic texture, the parts of the bottle corresponding to the rubber protection (represented by a white area 501 at the bottom) produce more friction than the metallic parts (represented with diamond-hashed patterns 502, 503, 504, 505, 506, 507, 508). A haptic file (MyHapticFile.gmpg) may also be added to the scene to be used for various interactions or to be referenced by a haptic texture. Tables below show the glTF syntax describing the 3D bottle according to the different embodiments.

Table 15 illustrates the glTF description for the 3D bottle according to the first embodiment where the additional information is based on Boolean information. This Boolean information is inserted in the MPEG_material_haptic section. In the example of table 15, the Boolean information is false so that each pixel value of the texture directly corresponds to a value of the haptic effect. The haptic effect is related to friction, as specified by the friction parameter of the MPEG_material_haptic section. The index is specified as being 7 ("index" parameter of the MPEG_material_haptic section), so that the texture associated with this effect is the waterbottle_friction.png file.

**Table 15: glTF description for the 3D bottle according to the third embodiment**

| |
|---|
| ``` { "accessors": [ { "bufferView": 0, "componentType": 5126, "count": 2549, "type": "VEC2" }, { "bufferView": 1, "componentType": 5126, "count": 2549, "type": "VEC3" }, { "bufferView": 2, "componentType": 5126, "count": 2549, "type": "VEC4" }, { "bufferView": 3, "componentType": 5126, "count": 2549, "type": "VEC3", "max": [ 0.05445001, 0.130220339, 0.0544500239 ], "min": [ -0.05445001, -0.130220339, -0.0544500239 ] }, { "bufferView": 4, "componentType": 5123, "count": 13530, ``` |
| ``` "type": "SCALAR" } ], "asset": { "generator": "glTF Tools for Unity", "version": "2.0" }, "bufferViews": [ { "buffer": 0, "byteLength": 20392 }, { "buffer": 0, "byteOffset": 20392, "byteLength": 30588 }, { "buffer": 0, "byteOffset": 50980, "byteLength": 40784 }, { "buffer": 0, "byteOffset": 91764, "byteLength": 30588 }, { "buffer": 0, "byteOffset": 122352, "byteLength": 27060 } ], "buffers": [ { "uri": "WaterBottle.bin", "byteLength": 149412 } ], "extensionsUsed": [ "KHR_materials_pbrSpecularGlossiness" ], "images": [ { "uri": "WaterBottle_baseColor.png" }, { "uri": "WaterBottle_roughnessMetallic.png" }, { "uri": "WaterBottle_normal.png" }, { "uri": "WaterBottle_emissive.png" }, { "uri": "WaterBottle_occlusion.png" }, { "uri": "WaterBottle_diffuse.png" }, ``` |
| ``` { "uri": "WaterBottle_specularGlossiness.png" }, { "uri": "WaterBottle_friction.png" } ], "meshes": [ { "primitives": [ { "attributes": { "TEXCOORD_0": 0, "NORMAL": 1, "TANGENT": 2, "POSITION": 3 }, "indices": 4, "material": 0 } ], "name": "WaterBottle" } ], "materials": [ { "pbrMetallicRoughness": { "baseColorTexture": { "index": 0 }, "metallicRoughnessTexture": { "index": 1 } }, "normalTexture": { "index": 2 }, "occlusionTexture": { "index": 4 }, "emissiveFactor": [ 1.0, 1.0, 1.0 ], "emissiveTexture": { "index": 3 }, "name": "BottleMat", "extensions": { "KHR_materials_pbrSpecularGlossiness": { "diffuseTexture": { "index": 5 }, "specularGlossinessTexture": { "index": 6 } }, "MPEG_material_haptic": { "friction": { "index": 7 ``` |
| ``` }, "friction_reference": false } } } ], "nodes": [ { "mesh": 0, "rotation": [ 0.0, 1.0, 0.0, 0.0 ], "name": "WaterBottle", "extensions": { "MPEG_material_haptic": { "media_reference": "MyHapticFile.gmpg" } } } ], "scene": 0, "scenes": [ { "nodes": [ 0 ] } ], "textures": [ { "source": 0 }, { "source": 1 }, { "source": 2 }, { "source": 3 }, { "source": 4 }, { "source": 5 }, { "source": 6 }, { "source": 7 } ] } ``` |

For the other embodiments, the core of the file is the same, only the MPEG_material_haptic section of the glTF description is different, as illustrated in the tables 16 to 19 below.

Table 16 illustrates the MPEG_material_haptic section of the glTF description for the 3D bottle according to the first variant of the second embodiment using a string as enumerated information to describe how to interpret the haptic texture. In this example, the string indicates High_Resolution so that the bit depth and value range for high resolution haptic textures defined in table 9 is used for the rendering of the haptic effect.

**Table 16: Example of the first variant of the second embodiment**

| |
|---|
| ``` "MPEG_material_haptic": { "friction": { "index": 7 }, "friction_type": "High_Resolution" } ``` |

Table 17 illustrates the MPEG_material_haptic section of the glTF description for the 3D bottle according to the second variant of the second embodiment using an integer as enumerated information to describe how to interpret the haptic texture. In this example, the integer indicates 0 that corresponds to High_Resolution as listed in the enumeration below table 9. Therefore, the bit depth and value range for high resolution haptic textures defined in table 9 is used for the rendering of the haptic effect.

**Table 17: Example of the second variant of the second embodiment**

| |
|---|
| ``` "MPEG_material_haptic": { "friction": { "index": 7 }, "friction_type": 0 } ``` |

Table 18 illustrates the MPEG_material_haptic section of the glTF description for the 3D bottle according to the third embodiment using arrays of textures based on a string information. In this example, the friction haptic effect uses the high-resolution 2D texture.

**Table 18: Example of the first variant of the third embodiment**

| |
|---|
| ``` "MPEG_material_haptic": { "friction": [ ``` |
| ``` { "index": 7 } ], "friction type": [ "High_Resolution" ] } ``` |

Table 19 illustrates the MPEG_material_haptic section of the glTF description for the 3D bottle according to the second variant of the third embodiment using a single array containing pairs of textures and type. In this example, the friction haptic effect uses the high-resolution 2D texture.

**Table 19: Example of the second variant of the third embodiment**

| |
|---|
| ``` "MPEG_material_haptic": { "friction": [ { "texture":{ "index": 7 }, "type":"High_Resolution" } ] } ``` |

**Figure 6** illustrates an example flowchart of process for rendering a haptic feedback description file according to at least one embodiment. Such process 600 is typically implemented in a haptic rendering device 100 and executed by a processor 101 of such device.

In step 601, the processor obtains a description of an immersive scene (191 in figure 1, 301 in figure 3). This may be done for example by receiving it from a server through a communication network, by reading it from an external storage device or a local memory, or by any other means. The processor analyses the scene description file to extract the haptic object (192 in Figure 1) that allows to determine the parameters related to the haptic effect, comprising more particularly the haptic volume associated with the haptic effect and the additional information related to haptic textures.

In step 602, the processor monitors a position of the user within the immersive scene to detect an intersection (object collision) with the haptic volume during the interaction. Collision detection may be performed for example by a dedicated physics engine specialized in this task.

In step 603, when such intersection is detected, an additional information related to haptic textures is tested. As described above, this information allows the haptic rendering device to determine how to interpret (and thus render) the haptic textures.

In a first case according to the test of step 603, the additional information indicates that the texture is to be interpreted as representing a value for the haptic effect, i.e., a conventional direct texture rendering. Thus, in step 605, the processor provides data of the haptic texture to the haptic actuators according to the position of the user with regard to the texture.

In a second case according to the test of step 603, the additional information indicates that the texture is to be interpreted as representing a reference to a haptic signal. In this case, in step 606, the processor selects, from a list of haptic signals, a haptic signal referenced by the value of a pixel of the texture, the pixel being determined according to the position of the user. For example, if the value of the pixel is '0', then the first signal of the list will be selected.

In step 607, the processor provides the data of the selected haptic signal to haptic actuators. In this context, the haptic signal for example represents a velocity-controlled signal to be rendered based on any one of the method of figures 2A to 2E. Other types of haptic signals, for example a temporally variable haptic signal, may be referenced based on the same technique.

Thus, the haptic effect is rendered according to the additional information of the haptic feedback.

As discussed above, a device receiving and decoding the immersive scene may not perform the rendering itself but delegates this task to other devices, for example a dedicated haptic rendering device. In this case, data is prepared for the rendering of the visual element and/or of the haptic effect and transmitted to the device performing the rendering. Such a remote rendering may be used for audio, video and haptic data and highly depends on the functionalities built-in the devices involved. In some cases, a combination of devices may be required to fully render the immersive experience. In other cases, the device comprises all elements require to perform all the tasks, including the decoding and the rendering. This is the case for example when a smartphone displays an augmented reality scene and provides vibrations when the user interacts with the scene.

Although different embodiments have been described separately, any combination of the embodiments together can be done while respecting the principles of the disclosure.

Although embodiments are related to haptic effects, the person skilled in the art will appreciate that the same principles could apply to other effects such as the sensorial effects for example and thus would comprise smell and taste. Appropriate syntax would thus determine the appropriate parameters related to these effects.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Additionally, this application or its claims may refer to "obtaining" various pieces of information. Obtaining is, as with "accessing", intended to be a broad term. Obtaining the information may include one or more of, for example, receiving the information, accessing the information, or retrieving the information (for example, from memory or optical media storage). Further, "obtaining" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

## Claims

1. A method for decoding a haptic effect comprising,
obtaining information representative of the haptic effect, wherein the information comprises an array of texture representations for a single haptic property, each texture representation comprising a haptic texture and associated additional information,
selecting, by a rendering device, one texture representation from the array based on capabilities of the rendering device;
when the additional information associated with the selected texture representation corresponds to a first value, providing data of the haptic texture of the selected texture representation to haptic actuators, and
when the additional information associated with the selected texture representation corresponds to a second value, selecting a haptic signal from a set of haptic signals based on a value of a taxel of the haptic texture of the selected texture representation and providing data of the selected haptic signal to the haptic actuators.

2. The method of claim 1 wherein the first value of the additional information associated with the selected texture representation indicates that the haptic texture is to be interpreted as a direct texture rendering and wherein data of the haptic texture is provided based on a position of an element representing a user with regard to the texture.

3. The method of claim 1 or 2 wherein the second value of the additional information associated with the selected texture representation indicates that the haptic texture is to be interpreted as comprising references to haptic signals and wherein selecting a haptic signal is performed based on a position of an element representing a user with regard to the texture.

4. The method of claim 3 wherein the haptic signal is rendered according to a velocity of an element representing the user.

5. The method of any of claims 1 to 4 wherein the additional information associated with the selected texture representation is a Boolean value.

6. The method of claim 5 wherein the first value of the additional information associated with the selected texture representation is FALSE, and the second value of the additional information is TRUE.

7. The method of any of claims 1 to 6 wherein the additional information associated with the selected texture representation is an enumerated value coded as an integer value or a string value.

8. The method of claim 7 wherein the array comprises a first texture representation having a first bit depth and a second texture representation having a second, different bit depth.

9. The method of claim 7 or 8 wherein the array comprises a first texture representation having a first range and a second texture representation having a second, different range

10. The method of claim 1, wherein the step of obtaining information is performed in response to detecting an intersection of a user element with a haptic volume in an immersive scene.

11. The method of claim 1, wherein the capabilities of the rendering device comprise a supported texture resolution, and the step of selecting is based on a comparison of the supported texture resolution with a resolution associated with at least one of the texture representations in the array.

12. A device for decoding a haptic effect comprising a processor configured to:
obtain information representative of the haptic effect, wherein the information comprises an array of texture representations for a single haptic property, each texture representation comprising a haptic texture and associated additional information,
select, by a rendering device, one texture representation from the array based on capabilities of the rendering device;
when the additional information associated with the selected texture representation corresponds to a first value, provide data of the haptic texture of the selected texture representation to haptic actuators, and
when the additional information associated with the selected texture representation corresponds to a second value, select a haptic signal from a set of haptic signals based on a value of a taxel of the haptic texture of the selected texture representation and provide data of the selected haptic signal to the haptic actuators.

13. A computer program comprising program code instructions for implementing the method according to any of claims 1 to 11 when executed by a processor.

14. A non-transitory computer readable medium comprising program code instructions for implementing the method according to any of claims 1 to 11 when executed by a processor.

## Patentansprüche

1. Verfahren zum Decodieren eines haptischen Effekts, wobei das Verfahren umfasst:
Erhalten von Informationen, die den haptischen Effekt repräsentieren, wobei die Informationen eine Anordnung von Texturdarstellungen für eine einzelne haptische Eigenschaft umfassen, wobei jede Texturdarstellung eine haptische Textur und zugeordnete zusätzliche Informationen umfasst,
Auswählen einer Texturdarstellung aus der Anordnung durch eine Rendering-Vorrichtung auf der Grundlage der Fähigkeiten der Rendering-Vorrichtung;
Bereitstellen von Daten der haptischen Textur der ausgewählten Texturdarstellung für haptische Aktuatoren, wenn die zusätzlichen Informationen, die der ausgewählten Texturdarstellung zugeordnet sind, einem ersten Wert entsprechen, und
Auswählen eines haptischen Signals aus einem Satz haptischer Signale auf der Grundlage eines Werts eines Taxels der haptischen Textur der ausgewählten Texturdarstellung und Bereitstellen von Daten des ausgewählten haptischen Signals für die haptischen Aktuatoren, wenn die zusätzlichen Informationen, die der ausgewählten Texturdarstellung zugeordnet sind, einem zweiten Wert entsprechen.

2. Verfahren nach Anspruch 1, wobei der erste Wert der zusätzlichen Informationen, die der ausgewählten Texturdarstellung zugeordnet sind, angibt, dass die haptische Textur als ein direktes Textur-Rendering interpretiert werden soll, und wobei Daten der haptischen Textur auf der Grundlage einer Position eines Elements, das einen Benutzer hinsichtlich der Textur darstellt, bereitgestellt werden.

3. Verfahren nach Anspruch 1 oder 2, wobei der zweite Wert der zusätzlichen Informationen, der der ausgewählten Texturdarstellung zugeordnet sind, angibt, dass die haptische Textur als eine interpretiert werden soll, die Bezugnahmen auf haptische Signale umfasst, und wobei das Auswählen eines haptischen Signals auf der Grundlage einer Position eines Elements, das einen Benutzer hinsichtlich der Textur darstellt, ausgeführt wird.

4. Verfahren nach Anspruch 3, wobei das haptische Signal in Übereinstimmung mit einer Geschwindigkeit eines Elements, das den Benutzer repräsentiert, gerendert wird.

5. Verfahren nach einem der Ansprüche 1 bis 4, wobei die zusätzlichen Informationen, die der ausgewählten Texturdarstellung zugeordnet sind, ein boolescher Wert sind.

6. Verfahren nach Anspruch 5, wobei der erste Wert der zusätzlichen Informationen, die der ausgewählten Texturdarstellung zugeordnet sind, FALSCH ist und wobei der zweite Wert der zusätzlichen Informationen WAHR ist.

7. Verfahren nach einem der Ansprüche 1 bis 6, wobei die zusätzlichen Informationen, die der ausgewählten Texturdarstellung zugeordnet sind, ein aufgezählter Wert sind, der als ein ganzzahliger Wert oder als ein Zeichenfolgenwert codiert ist.

8. Verfahren nach Anspruch 7, wobei die Anordnung eine erste Texturdarstellung, die eine erste Bittiefe aufweist, und eine zweite Texturdarstellung, die eine zweite, andere Bittiefe aufweist, umfasst.

9. Verfahren nach Anspruch 7 oder 8, wobei die Anordnung eine erste Texturdarstellung, die einen ersten Bereich aufweist, und eine zweite Texturdarstellung, die einen zweiten, anderen Bereich aufweist, umfasst.

10. Verfahren nach Anspruch 1, wobei der Schritt des Erhaltens von Informationen als Reaktion auf das Detektieren einer Überschneidung eines Benutzerelements mit einem haptischen Volumen in einer immersiven Szene ausgeführt wird.

11. Verfahren nach Anspruch 1, wobei die Fähigkeiten der Rendering-Vorrichtung eine unterstützte Texturauflösung umfassen und wobei der Schritt des Auswählens auf einem Vergleich der unterstützen Texturauflösung mit einer Auflösung, die mindestens einer der Texturdarstellungen in der Anordnung zugeordnet ist, beruht.

12. Vorrichtung zum Decodieren eines haptischen Effekts, wobei die Vorrichtung einen Prozessor umfasst, der konfiguriert ist zum:
Erhalten von Informationen, die den haptischen Effekt repräsentieren, wobei die Informationen eine Anordnung von Texturdarstellungen für eine einzelne haptische Eigenschaft umfassen, wobei jede Texturdarstellung eine haptische Textur und zugeordnete zusätzliche Informationen umfasst,
Auswählen einer Texturdarstellung aus der Anordnung durch eine Rendering-Vorrichtung auf der Grundlage der Fähigkeiten der Rendering-Vorrichtung;
Bereitstellen von Daten der haptischen Textur der ausgewählten Texturdarstellung für haptische Aktuatoren, wenn die zusätzlichen Informationen, die der ausgewählten Texturdarstellung zugeordnet sind, einem ersten Wert entsprechen, und
Auswählen eines haptischen Signals aus einem Satz haptischer Signale auf der Grundlage eines Werts eines Taxels der haptischen Textur der ausgewählten Texturdarstellung und Bereitstellen von Daten des ausgewählten haptischen Signals für die haptischen Aktuatoren, wenn die zusätzlichen Informationen, die der ausgewählten Texturdarstellung zugeordnet sind, einem zweiten Wert entsprechen.

13. Computerprogramm, das Programmcodeanweisungen zum Implementieren des Verfahrens nach einem der Ansprüche 1 bis 11, wenn es durch einen Prozessor ausgeführt wird, umfasst.

14. Nichttransitorisches computerlesbares Medium, das Programmcodeanweisungen zum Implementieren des Verfahrens nach einem der Ansprüche 1 bis 11, wenn es durch einen Prozessor ausgeführt wird, umfasst.

## Revendications

1. Procédé de décodage d'un effet haptique comprenant
l'obtention d'informations représentatives de l'effet haptique, où les informations comprennent un ensemble de représentations de texture pour une seule propriété haptique, chaque représentation de texture comprenant une texture haptique et des informations supplémentaires associées,
la sélection, par un dispositif de rendu, d'une représentation de texture de l'ensemble sur la base des capacités du dispositif de rendu ;
lorsque les informations supplémentaires associées à la représentation de texture sélectionnée correspondent à une première valeur, la fourniture des données de la texture haptique de la représentation de texture sélectionnée à des actionneurs haptiques, et
lorsque les informations supplémentaires associées à la représentation de texture sélectionnée correspondent à une deuxième valeur, la sélection d'un signal haptique parmi un ensemble de signaux haptiques sur la base d'une valeur d'un élément tactile de la texture haptique de la représentation de texture sélectionnée et la fourniture des données du signal haptique sélectionné aux actionneurs haptiques.

2. Procédé selon la revendication 1, dans lequel la première valeur des informations supplémentaires associées à la représentation de texture sélectionnée indique que la texture haptique doit être interprétée comme un rendu de texture direct, et dans lequel les données de la texture haptique sont fournies sur la base d'une position d'un élément représentant un utilisateur par rapport à la texture.

3. Procédé selon la revendication 1 ou 2, dans lequel la deuxième valeur des informations supplémentaires associées à la représentation de texture sélectionnée indique que la texture haptique doit être interprétée comme comprenant des références à des signaux haptiques, et dans lequel la sélection d'un signal haptique est effectuée sur la base d'une position d'un élément représentant un utilisateur par rapport à la texture.

4. Procédé selon la revendication 3, dans lequel le rendu du signal haptique est effectué conformément à une vitesse d'un élément représentant l'utilisateur.

5. Procédé selon l'une quelconque des revendications 1 à 4, dans lequel les informations supplémentaires associées à la représentation de texture sélectionnée sont une valeur booléenne.

6. Procédé selon la revendication 5, dans lequel la première valeur des informations supplémentaires associées à la représentation de texture sélectionnée est FALSE, et la deuxième valeur des informations supplémentaires est TRUE.

7. Procédé selon l'une quelconque des revendications 1 à 6, dans lequel les informations supplémentaires associées à la représentation de texture sélectionnée sont une valeur énumérée codée sous la forme d'une valeur entière ou d'une valeur de type chaîne.

8. Procédé selon la revendication 7, dans lequel l'ensemble comprend une première représentation de texture ayant une première profondeur de bits et une deuxième représentation de texture ayant une deuxième profondeur de bits différente.

9. Procédé selon la revendication 7 ou 8, dans lequel l'ensemble comprend une première représentation de texture ayant une première plage et une deuxième représentation de texture ayant une deuxième plage différente.

10. Procédé selon la revendication 1, dans lequel l'étape d'obtention d'informations est effectuée en réponse à la détection d'une intersection d'un élément utilisateur avec un volume haptique dans une scène immersive.

11. Procédé selon la revendication 1, dans lequel les capacités du dispositif de rendu comprennent une résolution de texture prise en charge, et l'étape de sélection est basée sur une comparaison entre la résolution de texture prise en charge et une résolution associée à au moins l'une des représentations de texture de l'ensemble.

12. Dispositif de décodage d'un effet haptique comprenant un processeur configuré pour :
obtenir des informations représentatives de l'effet haptique, où les informations comprennent un ensemble de représentations de texture pour une seule propriété haptique, chaque représentation de texture comprenant une texture haptique et des informations supplémentaires associées,
sélectionner, par l'intermédiaire d'un dispositif de rendu, une représentation de texture de l'ensemble sur la base des capacités du dispositif de rendu ;
lorsque les informations supplémentaires associées à la représentation de texture sélectionnée correspondent à une première valeur, fournir les données de la texture haptique de la représentation de texture sélectionnée à des actionneurs haptiques, et
lorsque les informations supplémentaires associées à la représentation de texture sélectionnée correspondent à une deuxième valeur, sélectionner un signal haptique parmi un ensemble de signaux haptiques sur la base d'une valeur d'un élément tactile de la texture haptique de la représentation de texture sélectionnée et fournir les données du signal haptique sélectionné aux actionneurs haptiques.

13. Programme d'ordinateur comprenant des instructions de code de programme pour la mise en œuvre du procédé selon l'une quelconque des revendications 1 à **11** lorsqu'elles sont exécutées par un processeur.

14. Support non transitoire lisible par ordinateur comprenant des instructions de code de programme pour la mise en œuvre du procédé selon l'une quelconque des revendications 1 à 11 lorsqu'elles sont exécutées par un processeur.
